## Europäisches Patentamt
## European Patent Office
## Office européen des brevets

(11) Publication number: **0 247 664**
**B1**

# EUROPEAN PATENT SPECIFICATION

(45) Date of publication of the patent specification:
25.04.90

(51) Int. Cl.⁴: **B32B 27/32**, B32B 27/30, B29C 43/02

(21) Application number: 87200864.4

(22) Date of filing: 08.05.87

(54) Multilayer laminates and retortable barrier containers.

(30) Priority: 19.05.86 US 864387
19.05.86 US 864389
19.05.86 US 864383

(43) Date of publication of application:
02.12.87 Bulletin 87/49

(45) Publication of the grant of the patent:
25.04.90 Bulletin 90/17

(84) Designated Contracting States:
BE CH DE ES FR GB IT LI LU NL SE

(56) References cited:
GB-A- 2 131 739
US-A- 4 255 490

DERWENT ABSTRACT no. 86-254 834 (WPIL)
TELESYSTEMES QUESTEL; Paris

(73) Proprietor: SHELL INTERNATIONALE RESEARCH
MAATSCHAPPIJ B.V., Carel van Bylandtlaan 30,
NL-2596 HR Den Haag(NL)

(72) Inventor: Coffman, Paul Mahoney, 1819 Cherry Bend
Drive, Houston Texas 77077(US)
Inventor: Miller, Charles Ralph, 101 Ambrose Hill,
Williamsburg Virginia 23185(US)

(74) Representative: Aalbers, Onno et al, P.O. Box 302,
NL-2501 CH The Hague(NL)

ACTORUM AG

## Description

This invention relates to multilayer laminates which may be formed into containers. More particularly, this invention relates to multilayer laminates which may be formed into barrier containers such as cups or cans by solid phase pressure forming.

Plastic containers for packaging food or drinks are known in the market. Many of such containers are made from polypropylene and/or polyethylene because of their relatively low cost, heat sealability and moisture resistance. However, these polyolefins have a fairly high permeability to gases including oxygen, so that, used alone, they are not adequate for packaging oxygen sensitive foods and other materials that degrade in the presence of oxygen.

To impart oxygen impermeability to polyolefin food or drink packages, various barrier polymers, such as copolymers of ethylene vinyl alcohol resins or polymers of vinylidene dichloride are used in multi-layer laminates. There are many patents describing such laminates, including, by way of example, US patents 4 239 826, 4 255 490, 4 254 169, 4 082 854, 4 182 457, 4 217 161 and 4 425 410 and UK patent 2 131 739. Containers can be formed directly from large sheets of these materials or, alternatively, individual preformed billets may be used instead of sheets. US patent No. 4 425 410 discloses a compositional blend of high molecular weight, high density polyethylene and polypropylene for making cans. US patent No. 4 255 490 discloses containers prepared from laminates comprising a layer of an acetal modified barrier polymer and a layer composed of a heat-sealable resin. US patent No. 2 131 739 discloses a multi-layer vessel comprising at least a layer of a crystalline polypropylene or propylene/ethylene copolymer, a layer of a barrier polymer and an adhesive resin layer.

It is recognized that to achieve significant market acceptability, such packages or containers must be able to withstand heating without significant distortion. The ability to hot fill or to retort foods in sheet or film packages permits the foods to be stored without refrigeration. Commercial sterilization by hot filling or retorting imposes several additional restrictions on the choice of materials for the sheet or film structure:

(1) the heat seal must survive commercial sterilization temperatures of over 85°C or typical retort conditions of steam or water at 120°C or more under pressure for one half hour or more;
(2) the structure must not delaminate; ·
(3) not shrink;
(4) not wrinkle as a result of the sterilization; .
(5) the oxygen and water barrier properties must not be permanently adversely affected by the conditions of commercial sterilization; and (6) the structure must be adequately strong to permit handling of the package while still hot.

These additional requirements imposed by hot filling or by retorting rule out many of the materials and structures commonly used for non-retorted film or sheet food packages.

It is also known to produce containers by solid phase pressure forming (SPPF) of polypropylene structures. This operation involves forming by heating to just under the crystalline melting point of polypropylene (160°C). The heated sheet is clamped between the moulds around each cavity. A forming plug then pushes it towards the bottom of the tooling. Cold compressed air enters through holes in the tooling and forces the hot sheet against the cooled surface of the cavity. The newly formed shape cools almost instantly and becomes rigid enough for trimming in place or in a subsequent downstream trim operation.

While various commercial solid phase forming processes have significant advantages over injection moulding processes, they are not without limitations or problems. One such problem with containers made by SPPF processes is that they can distort during subsequently retorting. Retorting refers to the heating of containers containing the food contents and a gas tight closure to contain the contents and protect it from oxygen ingress and moisture egress. In commercial practice the filled and sealed container is heated to 120°C for 30 to 60 min to kill the harmful bacteria which temperature experiences excursions to a temperature well above 120°C and a container must be expected to accept 135°C. Polypropylene containers made by SPPF begin to distort beyond acceptable limits at 120°C. The flanges turn downward and the sidewalls shrink in a non-uniform manner giving an unsightly product. Even with the simplest of shapes, 120°C is considered the absolute maximum temperature at which polypropylene cans made by SPPF can be retorted.

A laminate has now been found which may be formed into rigid containers that overcome the disadvantages of articles made by the prior art solid phase forming processes.

The present invention relates to a multilayer laminate made by coextrusion of

a) at least one layer of an oxygen barrier polymer;
b) at least one adhesive layer; and
c) at least one layer of a heat-sealable resin, characterized in that the heat-sealable resin is a polymer blend composition which comprises (i) from 10 to 50 parts by weight of a high density polyethylene having a melt flow index (MFI) between 0.1 dg/min and 4.0 dg/min and (ii) from 50 to 90 parts by weight of a propylene homopolymer having a MFI of between 0.3 and 10 dg/min.

The propylene homopolymer in component c) must have a MFI (ASTM D 1238-Condition L) of from 0.3 dg/min to 10.0 dg/min. The MFI is important because the higher the MFI of the propylene, the easier it is to make sheet, since lower temperatures can be used, resulting in less energy input and less degradation. Higher melt flow indices allow greater stretching ratios.

The second component in the polymer blend composition c) is a polyethylene having a MFI (ASTM D 1238, 2.16 kg/100°C) between 0.10 dg/min and 4.0 dg/min, preferably between 1.5 dg/min and 2.0 dg/min. Its density should be above 0.95 g/ml.

Preferred weight proportions of polyethylene (i) to polypropylene (ii) are 25 to 50 parts by weight to 75 to 50 parts by weight.

Suitable barrier layers should be able to resist moisture, retain flavours and aromas and include preferably, but are not limited to, a copolymer of ethylene and vinyl alcohol polymer (EVOL) or a polymer of vinylidene dichloride polymer (Saran®). The adhesive layer may be made of Admer® (Mitsui), Modic® (Mitsubishi), Plexar® (Norchem) or CXA® (DuPont) or similar materials.

The blend adhesive and barrier layers are typically coextruded into a laminate having a thickness usually greater than about 0.25 µm. Billets are punched or cut from the laminate. The resulting laminate is then formed into a container and later retorted. The preferred laminate is a five layer structure: blend/adhesive/EVOL/adhesive/blend. Another attractive possibility is a seven or nine layer structure blend/adhesive/EVOL/adhesive/EVOL/adhesive/blend or blend/adhesive/EVOL/adhesive/blend/adhesive/EVOL/adhesive/blend.

The forming processes may include vacuum moulding, plug moulding, vacuum moulding with plug assist, blow moulding, stamping and the like. A preferred process is a SPPF process, where the temperature is kept below 160°C. The SPPF process generally comprises placing a sheet or billet of the plastic material at the controlled temperature on the opening of the moulding cavity, clamping the sheet in the clamping device, lowering a plug of the desired configuration onto the sheet or billet and into the moulding cavity whereby material of the sheet or billet is drawn into the cavity, and supplying fluid pressure (e.g. air) between the plug and the draw sheet whereby the sheet is pressed against the walls of the mould cavity to form the hollow articles.

The temperature is controlled during the thermoforming process to keep the higher melting point polymer constituent in the multilaminate (propylene homopolymer) in the solid state. All other polymer constituents in the laminated may be molten. The other conditions for forming, such as pressure, residence time, type of machinery, and the like may be determined by one skilled in the art. Subsequent to the forming operation the containers may be subjected to post-heating (annealing) at temperatures, higher than the forming temperature but less than 170°C.

Various additives, such as stabilizers, anti-oxidants, fillers, flexibilizers, extending agents, reinforcing fibres, may be incorporated into the multi laminate to be subjected to SPPF in the process of this invention. Preferably such constituents are incorporated into blend component c).

Example 1

A 50/50 pbw blend of high density polyethylene (HDPE), density 0.96, MFI 0.2 dg/min propylene homopolymer, (PP), MFI 0.7 dg/min were coextruded with ADMER adhesive and EVOH barrier polymer to form the five layer laminate set out hereinabove.

The laminate is then formed into cups at 150 °C. The cups, when retorted at 135 °C, are found to be free from distortion by visual observation. The rims of each cup should be set flush against a flat surface for the can to be considered distortion free. When the cup distorts, the rim is not flush against the surface. Other indices of distortion are the extent of wrinkling and bending of the sides of the cup.

Example 2

Various polyolefin blends are made into layers and coextruded with adhesive and barrier layers and cans were made in the SPPF process at 150°C. Each blend was processed into a five layer laminate as described in Example I, the HDPE employed was that of Example 1, the PP employed had MFI 2.0 dg/min.

### TABLE

| PP pbw | HDPE pbw | Remarks |
|---|---|---|
| 100 | 0 | Excessive sheet sag and poor material distribution wrinkled |
| 25 | 75 | Distorted |
| 50 | 50 | Distortion free, formable |
| 75 | 25 | Distortion free, formable |

Example 3

A 50/50 pbw blend of HDPE, MFI 0.2 dg/min and PP, MFI 0.7 dg/min was made. Five layer laminate was made by known coextrusion means and then passed through ovens with varying temperatures of 142 °C, 150°C, 155°C and 159°C. The sheet is then thermoformed into cans at these particular temperatures, the cans were retorted at 135°C or 125°C and found to be distortion-free and non deformable by visual observation.

Retorting was done at 135°C by placing the containers in an air oven at 135°C for 30 minutes and by putting containers in a steam pressure cooker at 125°C for 30 minutes.

## Claims

1. A multilayer laminate made by coextrusion of
a) at least one layer of an oxygen barrier polymer;
b) at least one adhesive layer; and
c) at least one layer of a heat-sealable resin, characterized in that the heat-sealable resin is a polymer blend composition which comprises (i) from 10 to 50 parts by weight of a high density polyethylene having a melt flow index between 0.1 dg/min and 4.0 dg/min (ASTM D 1238, 2.16 kg/100°C) and (ii) from 50 to 90 parts by weight of a propylene homopolymer having a melt flow index of between 0.3 and 10 dg/min (ASTM D 1238, Condition L).

2. The laminate of claim 1, wherein said polymer blend composition has a melt flow index between 0.1 dg/min and 2.0 dg/min.

3. The laminate of claim 1, wherein said oxygen barrier layer is a copolymer of ethylene and vinylalcohol.

4. The laminate of claim 1, wherein said polymer blend composition comprises (i) from 25 to 50 parts by weight of high density polyethylene and (ii) from 50 to 75 parts by weight of propylene homopolymer.

5. A process for producing retortable containers comprising solid phase pressure forming at a temperature of up to 160°C of a laminate, characterized in that a laminate as claimed in any one of claims 1 to 4 is used.

## Patentansprüche

1. Durch Coextrusion hergestelltes, mehrschichtiges Laminat aus
a) zumindest einer Polymerschicht, die als Sauerstoff-Sperrschicht wirkt;
b) zumindest einer Kleberschicht und
c) zumindest einer Schicht eines warmsiegelbaren Harzes, dadurch gekennzeichnet, daß das warmsiegelbare Harz ein Polymergemisch ist, welches (i) 10 bis 50 Gew.-Teile Polyethylen hoher Dichte mit einem Schmelzindex zwischen 0,1 und 4 dg/min (ASTM D 1238, 2,16 kg/100°C) und (ii) 50 bis 90 Gew.-Teile eines Propylen-Homopolymeren mit einem Schmelzindex zwischen 0,3 und 10 dg/min (ASTM D 1238, Prüfbedingung L) enthält.

2. Laminat nach Anspruch 1, wobei das Polymergemisch einen Schmelzindex zwischen 0,1 und 2 dg/min besitzt.

3. Laminat nach Anspruch 1, wobei die Sauerstoff-Sperrschicht aus einem Copolymeren von Ethylen und Vinylalkohol besteht.

4. Laminat nach Anspruch 1, wobei das Polymergemisch (i) 25 bis 50 Gew.-Teile Polyethylen hoher Dichte und (ii) 50 bis 75 Gew.-Teile Propylen-Homopolymer enthält.

5. Verfahren zur Herstellung von in der Hitze behandelbaren Behältern, wobei ein Pressformen in fester Phase bei einer Temperatur bis 160°C eines Laminats stattfindet, dadurch gekennzeichnet, daß das Laminat dem der Ansprüche 1 bis 4 entspricht.

## Revendications

1. Un produit stratifié multicouches formé par coextrusion de
a) au moins une couche d'un polymère formant barrière contre l'oxygène;
b) au moins une couche d'adhésif; et
c) au moins une couche d'une résine thermosoudable, caractérisée en ce que la résine thermosoudable est une composition d'un mélange de polymères qui comprend (1) de 10 à 50 parties en poids d'un polyéthylène haute densité ayant un indice de fluidité à chaud compris entre 0,1 dg/min et 4,0 dg/min (norme ASTM D 1238, 2, 16 kg/100°C) et (2) de 50 à 90 parties en poids d'un homopolymère de propylène ayant un indice de fluidité à chaud compris entre 0,3 et 10 dg/min (norme ASTM D 1238, Condition L).

2. Le stratifié selon la revendication 1, dans lequel la composition de mélange de polymères a un indice de fluidité à chaud compris entre 0,1 dg/min et 2,0 dg/min.

3. Le stratifié selon la revendication 1, dans lequel la couche formant barrière contre l'oxygène est un copolymère d'éthylène et d'alcool vinylique.

4. Le stratifié selon la revendication 1, dans lequel la composition de mélange de polymères comprend (1) de 25 à 50 parties en poids de polyéthylène haute densité et (2) de 50 à 75 parties en poids d'homopolymère de propylène.

5. Un procédé de production de récipients susceptibles de passage à l'autoclave, comprenant le formage sous pression en phase solide à une température allant jusqu'à 160°C d'un stratifié, caractérisé en ce qu'on utilise un stratifié selon l'une quelconque des revendications 1 à 4.